# NOUVEAU FASCICULE DE BREVET EUROPEEN

(11) **EP 0 246 952 B2**
(45) Date de publication et mention de la décision concernant l'opposition: **21.04.1999**
(45) Mention de la délivrance du brevet: 28.04.1993
(21) Numéro de dépôt: 87401076.2
(22) Date de dépôt: 13.05.1987
(51) Int. Cl.: C04B 20/10, C04B 14/38, C03C 25/02, C04B 26/02, C04B 30/02

(54) **Utilisation d'une émulsion aqueuse d'un additif insoluble dans l'eau pour matériaux isolants en fibres minérales**
Verwendung einer wässerigen Emulsion eines wasserunlöslichen Zusatzes für isolierende Materialien aus Mineralfasern
Use of an aqueous emulsion of a water-insoluble additive for a mineral-fibre insulating material

(30) Priorité: 15.05.1986 DE 3616454
(43) Date de publication de la demande: 25.11.1987
(73) Titulaire: ISOVER SAINT-GOBAIN, F-92400 Courbevoie (FR)
(72) Inventeur: Tiesler, Hartmut, D-6719 Bockenheim (DE); Schirmeisen, Joseph, D-6704 Mutterstadt (DE)
(74) Mandataire: R.A. KUHNEN & P.A. WACKER

(56) Documents cités:
- US-A- 3 793 065
- CHEMICAL ABSTRACTS, vol. 99, no. 14, 3 octobre 1983, page 265, résumé no. 109651h, Columbus, Ohio, US; & SU-A-1 016 262 (T.S. NOVIKOVA et al.) 07-05-1983
- CHEMICAL ABSTRACTS, vol. 99, no. 24, 12 décembre 1983, page 275, résumé no. 199531w, Columbus, Ohio, US; & JP-A-58 95 629 (NIPPON VAIQUA INDUSTRIES, LTD) 07-06-1983
- "TYLOSE FÜR DAS HERSTELLEN VON EMULSIONEN", Kalle AG, Wiesbaden, DE
- "METHOCEL HANDBUCH", The Dow Chemical company, chapitre 3, (1966)

## Description

L'invention concerne l'utilisation de l'émulsion aqueuse d'un additif insoluble dans l'eau qui est un agent anti-poussières et/ou hydrofuge, ladite émulsion étant produite par dispersion dudit additif insoluble au moyen d'un appareil à disperser hautes performances dans la solution aqueuse d'un éther cellulosique et étant essentiellement dépourvue de tout autre émulsifiant et/ou tensio-actif, la teneur en poids de l'éther cellulosique étant de 0,1 à 2,5%, et de préférence de 0,2 à 1,0 rapportée au poids de l'additif insoluble dans l'eau,
pour l'imprégnation (l'ensimage; de fibres minérales synthétiques pour produits isolants.

Des matériaux isolants en fibres minérales sont imprégnés pour l'amélioration de leurs caractéristiques de maintien avec des additifs comme par exemple des agents ou de liaisons des poussières ou hydrofuges ou de lissage et de lubrification ou autres additifs. De plus, on ajoute des matériaux sous forme de duromères thermodurcissables comme par exemple des résines phénol-formaldéhyde afin de conférer une certaine stabilité de forme aux fibres minérales en liaison.

Afin d'obtenir une répartition uniforme de ces additifs, autour de fibres minérales qui sont retravaillées sous la forme d'une bande de fibres, il est essentiel d'introduire les additifs à un stade du procédé de fabrication où les fibres peuvent encore être imprégnées individuellement, donc avant la formation de la bande feutrée.

Il faut donc intervenir au voisinage immédiat de l'assiette de fibrage, là où règnent un rayonnement de chaleur intense et un danger latent d'inflammation en raison de la proximité du verre fondu à très haute température.

De ce fait, les additifs doivent remplir plusieurs conditions :
- posséder une faible volatilité propre,
- être diluables dans l'eau,
- pouvoir être traités par pulvérisation,
- ne pas s'enflammer pendant le traitement.

D'après l'état de la technique, ces conditions sont remplies par une dispersion ou une émulsion aqueuse d'additifs qui présente la stabilité nécessaire et qui peut être diluée par addition d'eau à la concentration faible recherchée. Les matériaux isolants en fibres minérales ainsi imprégnés ne conviennent toutefois qu'à certaines utilisations pratiques.

L'obtention d'une émulsion aqueuse d'huiles minérales (qui peuvent être ajoutées à titre d'agents de liaison des poussières), de silicones (qui peuvent servir d'agents hydrofuges), ou encore d'autres substances semblables insolubles dans l'eau, n'est possible qu'avec des émulsifiants. Des émulsifiants sont des substances actives aux interfaces, ayant une bonne solubilité dans les phases aqueuses et non aqueuses. Avec des émulsions d'huiles minérales - appelées encore agents d'ensimage dans l'industrie des matériaux isolants - on obtient un taux de liaison des poussières remarquable.

Ceci s'explique par le fait que l'ensimage par une huile minérale est avantageux car l'huile agit comme agent lubrifiant dans les mouvements relatifs des fibres. De ce fait, le frottement verre sur verre est moindre et on réduit le danger de fissure ou de brisure du verre (fibres de verre) et donc, on a peu de poussières formées. De plus, la poussière formée malgré toutes les précautions de mise en oeuvre reste collée aux fibres intactes et ne peut être entraînée par l'air environnant. Cet effet est une conséquence du caractère collant des huiles minérales. C'est pourquoi l'ensimage avec des agents de liaison des poussières est indispensable pour l'obtention d'un produit isolant en fibres minérales synthétiques commercialisable.

Il est aussi apparu que les matériaux isolants imprégnés d'agents de liaison des poussières prennent facilement l'eau. Si on pose sur l'eau par exemple un mat en un matériau isolant imprégné d'un agent de liaison des poussières, le mat aspire rapidement l'eau et tombe au fond du récipient. L'eau pulvérisée, par exemple l'eau de pluie, est également aspirée par le mat qui est trempé. Ceci représente un inconvénient majeur car les matériaux en fibres minérales qui sont trempés à l'usage, par exemple par la pluie, doivent être séchés à un coût élevé et reste latent un danger de corrosion par du matériau non parfaitement sec. De plus, de nombreuses huiles minérales émulsionnables et d'autres additifs insolubles dans l'eau sont entraînés par l'eau sous l'effet des émulsifiants adhérents.

De même, l'obtention d'émulsions aqueuses stables à base de silicones, qui peuvent servir à l'hydrofugation de matériaux isolants en fibres minérales, nécessite généralement l'addition d'agent solvatant et de grandes quantités d'émulsifiant. L'effet hydrophobe de la silicone est souvent affaibli par l'influence hydrophile de l'émulsifiant et de même parfois annulé, l'addition de silicone étant alors inutile. Ce n'est qu'au prix d'une mise en oeuvre de techniques particulières que l'émulsifiant peut être modifié après l'absorption de l'émulsion par les fibres minérales afin de lui faire perdre son pouvoir émulsifiant.

C'est pourquoi, de nombreuses tentatives ont déjà été faites pour supprimer ou contourner les défauts de la mise en oeuvre d'émulsions d'additifs comportant des émulsifiants. Au cours d'essais de réductions des quantités d'émulsifiants ajoutés, l'émulsion fut toutefois si instable que l'objectif d'imperméabilisation ne pouvait être atteint.

On a aussi proposé d'utiliser comme émulsifiants des savons alcalins ou ammoniaqués d'acides gras ou résiniques. De telles substances peuvent être utilisées en tant qu'émulsifiants efficaces pour les huiles minérales à forte viscosité, la quantité ajoutée étant de l'ordre de 5 % de la masse d'huile minérale. L'action émulsifiante des savons peut être annulée par précipitation chimique avec du lait de chaux, par exemple par pulvérisation simultanée de l'émulsion contenant du savon et du lait de chaux. Les savons ammoniaqués peuvent être également détruits par décomposition thermique lors du traitement dans l'étuve de polymérisation du produit imprégné. Toutefois, cette pulvérisation additionnelle de lait de chaux ou cette étape supplémentaire d'échauffement dans l'étuve constitue un obstacle technique et scientifique qui complique sérieusement la mise en oeuvre.

Il est aussi connu un procédé selon lequel l'huile minérale à forte viscosité utilisée comme additif pour des matériaux isolants en fibres minérales synthétiques est diluée, par addition d'un agent organique solvatant, d'une manière telle que sa viscosité soit alors semblable à celle de l'eau. Dans cette forme, la solution d'huile minérale est ajoutée à la solution de résine au moyen de mélangeurs statiques et ces deux solutions sont pulvérisées ensemble. Le procédé nécéssite des quantités élevées d'agent solvatant (de 25 à 45 % rapporté à l'huile minérale utilisée comme agent de liaisons des poussières) ce qui double ou même triple les émissions de dioxyde de carbone de l'installation.

L'invention a pour objectif d'imprégner d'une manière simple et efficace, si possible de façon assez durable, des matériaux isolants en fibres minérales synthétiques avec des additifs tels des agents ou de liaisons des poussières ou imperméabilisants ou lubrifiants, ou encore lissants. De plus, les matériaux isolants ainsi imprégnés doivent si possible absorber peu d'eau.

Cet objectif est atteint par l'utilisation selon l'invention d'émulsions aqueuses pour ensimer des fibres minérales synthétiques et par des matériaux isolants imprégnés de cette manière.

Les additifs insolubles dans l'eau (comme par exemple les huiles minérales visqueuses) peuvent former dans l'eau des émulsions stables, finement divisées, dans une solution visqueuse d'un éther cellulosique soluble dans l'eau, en utilisant un appareil à disperser hautes performances et sans utiliser d'émulsifiants ou d'autres tensio-actifs : les émulsions formées étant suffisamment stables pour être mises en oeuvre, Ces émulsions peuvent être diluées à des concentrations en principes actifs (1 % ou moins) propres à l'utilisation, par des mélangeurs usuels tels des agitateurs à pale, et sont stables et miscibles avec les résines employées comme liant.

Les éthers cellulosiques sont des éthers d'alkyl, aralkyl cellulose, d'hydroxy-alkyl cellulose et carboxy-alkyl cellolose et ils ne conduisent pas ou quasiment pas à une diminution de la résistance de surface. Les éthers cellulosiques sont déjà connus comme agents aidant à l'émulsion car ils s'opposent à la coalescence : ils entourent les gouttes d'huiles formées dans l'eau sans pénétrer directement, c'est à dire sans se solubiliser, dans la phase huileuse, contrairement à ce qui se passe avec les émulsifiants. En raison de leur insolubilité dans l'huile, les éthers cellulosiques sont ajoutés à la phase aqueuse dans laquelle Ils sont bien solubles et ils maintiennent en suspension les-gouttes d'émulsions formées.

Il n'était toutefois pas connu que les éthers cellulosiques rendent possible l'obtention d'émulsions aqueuses d'additifs pour matériaux isolants en fibres minérales synthétiques et ont pour effet une absorption (ensimage) permanente de l'additif par les fibres minérales synthétiques.

Parmi les éthers cellulosiques utilisables selon l'invention, sont plus particulièrement préférées les éthers d'hydroxy-éthyl cellulose, l'éther de méthyl-hydroxyéthyl cellulose et l'éther de sodocarboxyméthyl cellulose, parfaitement non ioniques et de ce fait bien compatibles avec les résines phénoliques ou d'autres additifs. On les utilise en quantités de 0,1 à 2,5 %, notamment de 0,2 à 1,0 %, rapportées à l'additif insoluble dans l'eau Avec des quantités supérieures à 2.5 %, la viscosité du mélange devient très importante et une dispersion de l'huile n'est plus possible. Comme additifs insolubles dans l'eau, on peut employer la plupart des agents de liaisons des poussières et/ou imperméabilisants connus par l'homme de l'art, une huile minérale étant préférée comme agent de liaison des poussières et une silicone comme agent hydrofuge.

Les appareils à disperser hautes performances qui sont utilisés pour le procédé selon l'invention sont tels que grâce à des puissances de brassages suffisamment élevées, on obtienne par des moyens mécaniques, une fine dispersion de l'additif insoluble dans l'eau, par exemple de l'huile ou de la silicone. Les appareils commercialisés par la société JANKE & KUNKEL sous les marques "ULTRA-TURRAX" ou "DISPAX" conviennent pour une telle dispersion.

L'invention est maintenant décrite plus précisément à l'aide des 6 exemples suivants :

### EXEMPLE 1

Obtention d'une émulsion d'huile dispersée d'un agent hydrofuge par un procédé discontinu.

Outre un mélangeur de 120 litres sont utilisés :
- 200 kg d'une solution aqueuse à 0,75 % d'éther d'hydroxyéthyl cellulose (HEC) (référence tylose H 100.000 marque commerciale de la société HOECHST AG).
- 300 kg d'huile de fabrication (huile à cylindres surchauffés à la vapeur, conforme à la norme DIN 51 510) (huile minérale).
- 500 kg d'eau saturée en sel.

Avec un appareil à disperser hautes performances commercialisé sous la marque "ULTRA-TURRAX" par la société JANKE & KUNKEL, on mélange intensivement la solution HEC, échauffée à 50° et l'huile de fabrication. On obtient une dispersion suffisante, par voie purement mécanique. Le mélangeage est stoppé lorsque la masse prend une couleur homogène, ce qui nécessite de 10 à 15 minutes. Sous agitation, le mélange est ajouté lentement au début puis plus rapidement, à l'eau saturée en sel, à une température de 20 à 25° C.

On obtient 100 kg d'une émulsion de base à 30 %, qui peut ensuite être diluée avant utilisation.

### EXEMPLE 2

Obtention d'une émulsion d'huile dispersée d'un agent hydrofuge par un procédé continu.

Pour une émulsion de base à 30 %, on utilise :
- 200 kg d'une solution aqueuse à 1 % d'éther de sodocarboxyméthyl-cellulose (référence CBR - 10.000 mp, marque commerciale de la société HOECHST AG).
- 300 kg d'huile minérale (référence FIONA ZB de la société SHELL).
- 500 kg d'eau saturée en sel.

A partir de deux récipients de stockage, l'un contenant l'huile minérale à 50°, l'autre la solution d'éther cellulosique à 1 % on alimente grâce à deux pompes à piston-plongeur, un disperseur travaillant en continu du type réacteur-dispax de la société JANKE & KUNKEL, qui fonctionne au moyen de trois disques rotor-stator actionnés l'un derrière l'autre. Le rapport volumique huile minérale/solution d'éther cellulosique est de 3 pour 2. Les deux composés sont mélangés intensément avec un temps de temporisation d'environ 2 secondes.

Ce mélange est conduit directement à deux disperseurs du type DISPAX où a lieu une dilution à 30 % de l'émulsion par addition de 5 parts d'eau saturée en sel.

Par addition de quantités supplémentaires d'eau, l'émulsion peut ensuite être diluée dans un mélangeur statique à la concentration d'utilisation souhaitée de 2 à 8 %.

Comme le montrent les exemples suivants, il est aussi possible d'après le procédé selon l'invention, de disperser des huiles silicones avec des huiles minérales.

### EXEMPLE 3

Obtention d'une émulsion d'huile dispersée d'un agent hydrofuge par un procédé discontinu.

Pour une émulsion de base à 30 %, on utilise :
- 150 kg d'une solution aqueuse à 1 % d'éther de méthylhydroxyéthyl cellulose (CMC) (référence tylose C 10.000, marque commerciale de la société HOECHST AG).
- 240 kg d'huile de fabrication (huile minérale 0303 de la société SHELL, huile à cylindres surchauffés à la vapeur conforme à la norme DIN 51 510).
- 60 kg d'huile de silicone du type "DC 200/100 cst, fluide" de la société Dow-Corning.
- 550 kg d'eau saturée en sel.

La façon de procédé est identique à celle décrite pour l'exemple 1, l'huile minérale et l'huile de silicone mélangée avant l'addition de la solution CMC.

### EXEMPLE 4

Obtention d'un agent hydrofuge mélangé par un procédé discontinu.

Pour une émulsion de base à 30 %, on utilise :
- 200 kg d'une solution aqueuse à 0,75 % d'éther d'hydroxyéthyl cellulose (référence tylose A 1.000, marque commerciale de la société HOECHST).
- 240 kg d'huile de fabrication N° 6 commercialisée par la société KOMPRESSOL (huile à cylindres surchauffés à la vapeur conforme à la norme DIN 51 510).
- 60 kg d'huile de silicone avec des groupes Si-H réactifs (référence DC 1107 fluide de la société Dow-Corning).
- 550 kg d'eau saturée en sel.

La façon de procédé est identique à cette décrite pour l'exemple 1, l'huile minérale est mélangée à l'huile de silicone avant l'addition de la solution d'éther cellulosique.

Les préparations des exemples 3 et 4 peuvent être également obtenues par un procédé continu conformément à l'exemple 2.

### EXEMPLE 5

Obtention d'une émulsion d'huile de silicone par un procédé discontinu ou continu.

Pour une émulsion de base à 30 %, on utilise :
- 300 kg d'une solution aqueuse à 0,75 % d'éther d'hydroxyéthyl cellulose (référence tylose A 1.000, marque commerciale de la société HOECHST).
- 300 kg d'huile de silicone (par exemple du type TEGO CK 500, de la société Goldschmitt, Essen),
- 550 kg d'eau saturée en sel.

La façon de procéder est identique à celle décrite pour les exemples 1 et 2.

### EXEMPLE 6

Obtention d'un mat isolant en fibres minérales sans liant.

Au cours de l'obtention de fibres de verre par le procédé de soufflage à turbulences organisées, on pulvérise sur le faisceau de fibres de verre à 600-700 °C, sous le dispositif de fibrage à savoir la buse de soufflage, avant l'entrée des fibres dans la hotte de réception, et à l'aide de plusieurs buses une émulsion d'huile d'ensimage à environ 2 % obtenue conformément aux exemples 1 à 5, en une quantité de 25 litres pour 100 kg de fibres de verre. Après passage au travers de la hotte de réception, les fibres ensimées refroidies à 100-120 °C sont récupérées sur une bande transporteuse et transportées sur une distance de 30 à 40 mètres jusqu'aux étapes suivantes de fabrication.

Suivant la vitesse de la bande transporteuse, on obtient des mats de 30 à 120 mm d'épaisseur, avec une teneur en huile de 0,2 à 0,4 %.

### EXEMPLE 7

Obtention d'un mat ou d'une plaque isolante en fibres minérales avec un liant synthétique.

Pendant le processus d'obtention de fibres de verre, par un procédé de fibrage usuel, par exemple au

moyen d'une assiette de centrifugation ou pu un procédé de soufflage à turbulences organisées, sous le dispositif de fibrage proprement dit et avant l'entrée des fibres dans une chambre de réception, on pulvérise sur les fibres une solution aqueuse, comportant de 1 à 10 % (en poids) d'une matière grasse de composition suivante :
7.a)
   - 3 (1 à 10) parts en poids d'un précondensé phénol-formaldéhyde (résine résol),
   - 1 (0,5 à 2) parts en poids d'huile d'ensimage (émulsion à 2 % (1 à 3 %) préparée conformément à l'exemple 1).
7.b)
   - 2 (1 à 10) parts en poids d'un précondensé phénolformaldéhyde (résine résol),
   - 2 (0,5 à 2) parts en poids d'une huile d'ensimage (émulsion à 2 % (1 à 3 %) préparée conformément à l'exemple 3 ou 4 ; émulsion d'une huile minérale et de silicone.
7.c)
   - 2,5 (0,4 à 5) parts en poids d'un précondensé phénolformaldéhyde (résine résol),
   - 0,4 (0,2 à 0,8) parts en poids d'une huile silicone (émulsion aqueuse à 3.6 % préparée avec 0,75 % en poids de carboxyméthyl cellulose (exemple 4).
7.d) semblable à l'exemple 7.b mais sans résine résol cette fois.

La bande de fibres humides formée sous la hotte de réception est préssée entre deux bandes métalliques perforées afin d'obtenir une plaque ou un feutre de 15 à 150 mm d'épaisseur : simultanément, elle est séchée par de l'air à 200-250 °C et est durcie. Le feutre obtenu de cette manière est roulé sur un treillis métallique.

### RESULTATS

Les capacités d'absorption de l'eau des mats obtenus conformément aux exemples 6 et 7 sont testés de la manière suivante :

On découpe des éprouvettes de 200 x 200 mm² que l'on plonge dix minutes dans au moins 30 mm d'eau. On les laisse ensuite s'égoutter pendant dix minutes en les posant sur un bord et on mesure alors l'augmentation de poids de l'éprouvette (ramenée à 1 m³). Un produit est dit hydrophobe si la valeur (en kg/m³) de la prise de poids est inférieure à cette de l'épaisseur du produit (en mm). Indépendamment de l'épaisseur, des valeurs inférieures à 40 kg/m³ sont toujours considérées satisfaisantes.

Dans le tableau suivant ont été répertoriées les quantités d'eau (en kg/m³) absorbées par différents échantillons préparés conformément aux exemples 1 à 7.

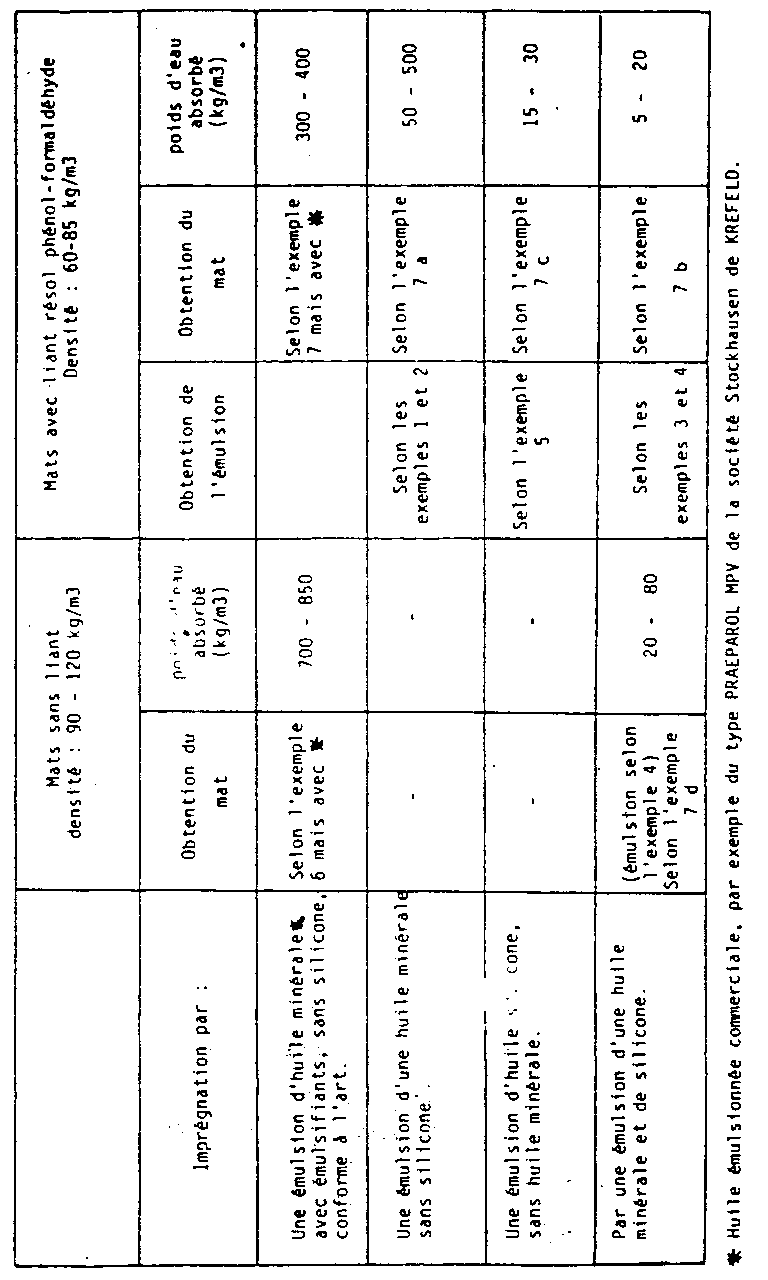

## Revendications

1. Utilisation de l'émulsion aqueuse d'un additif insoluble dans l'eau
qui est un agent anti-poussières et/ou hydrofuge, ladite émulsion étant produite par dispersion dudit additif insoluble au moyen d'un appareil à disperser hautes performances dans la solution aqueuse d'un éther cellulosique et étant essentiellement dépourvue de tout autre émulsifiant et/ou tensio-actif, la teneur en poids de l'éther cellulosique étant de 0,1 à 2,5%, et de préférence de 0,2 à 1,0 rapportée au poids de l'additif insoluble dans l'eau,
pour l'imprégnation (l'ensimage) de fibres minérales synthétiques pour produits isolants.

2. Utilisation selon la revendication 1, caractérisée est ce qu'on utilise en tant qu'éther cellulosique une hydroxyéthylcellulose, méthylhydroxyéthylcellulose et/ou sodocarboxyéthylcellulose.

3. Utilisation selon la revendication 1 ou 2, caractérisée en ce qu'on utilise en tant qu'additif un mélange d'une huile minérale et d'une huile silicone.

## Claims

1. Use of an aqueous emulsion of a water-insoluble additive
which is a dust-preventing and/or water-repellent agent, said emulsion being obtained by dispersing said insoluble additive by means of a high-performance dispersing apparatus in an aqueous solution of a cellulose ether and being substantially without any other emulsifier and/or surfactant, the amount by weight of the cellulose ether being 0.1 to 2.5%, preferably 0.2 to 1.0%, relative to the weight of the water-insoluble additive,
for impregnating (sizing) synthetic mineral fibres for insulating products.

2. Use according to claim 1, characterised in that a hydroxyethylcellulose, methylhydroxyethylcellulose and/or sodiocarboxyethylcellulose is used as the cellulose ether.

3. Use according to claim 1 or 2, characterised in that a mixture of a mineral oil and a silicon oil is used as the additive.

## Patentansprüche

1. Verwendung einer wäßrigen Emulsion eines wasserunlöslichen Additivs,
bei welchem es sich um ein Staubbindemittel und/oder Hydrophobierungsmittel handelt, wobei diese Emulsion durch Dispergieren des unlöslichen Additivs mittels eines Hochleistungsdispergiergerätes in der wäßrigen Lösung eines Celluloseethers hergestellt wurde und im wesentlichen kein anderes Emulgiermittel und/oder Tensid enthält, der Gehalt an Celluloseether, bezogen auf das Gewicht des wasserunlöslichen Additivs, 0,1 bis 2,5 Gewichtsprozent, vorzugsweise 0,2 bis 1,0 Gewichtsprozent beträgt,
zum Imprägnieren (Schmälzen) von künstlichen Mineralfasern für Dämmstoffe.

2. Verwendung nach Anspruch 1, dadurch gekennzeichnet, daß man als Celluloseether Hydroxyethylcellulose, Methylhydroxyethylcellulose und /oder Natrium-Carboxymethylcellulose einsetzt.

3. Verwendung nach Anspruch 1 oder 2, dadurch gekennzeichnet, daß man als Additiv eine Mischung eines Mineralöls und eines Silikonöls einsetzt.
